# EUROPEAN PATENT APPLICATION

(11) **EP 4 807 865 A1**
(43) Date of publication of application: **16.09.2026**
(21) Application number: 26154425.8
(22) Date of filing: 27.01.2026
(51) Int. Cl.: H01M 50/176, H01M 50/184, H01M 50/186, H01M 50/342, H01M 50/567, H01M 50/586

(54) **RECHARGEABLE BATTERY AND MODULE OF THE SAME**

(30) Priority: 11.03.2025 KR 20250031602
(71) Applicant: SAMSUNG SDI CO., LTD., Yongin-si, Gyeonggi-do 17084 (KR)
(72) Inventor: KIM, Kyoungsoo, 17084 Yongin-si, Gyeonggi-do (KR)
(74) Representative: Gulde & Partner

(57) **Abstract**

A rechargeable battery, including an electrode assembly, a case accommodating the electrode assembly, a cap plate coupled to an opening of the case, the cap plate including a first vent, and an insulation member having a second vent, the insulation member being between the electrode assembly and the cap plate, the electrode and the cap plate being inside the case.

## Description

### BACKGROUND

### 1. Field

The present disclosure relates to a rechargeable battery and a module of the same.

### 2. Description of the Related Art

As is known, a rechargeable is a battery that repeatedly performs charging and discharging, unlike a primary battery. Small-capacity rechargeable batteries are used in a portable small electronic device, such as a mobile phone, a notebook computer, and a camcorder. High-capacity and high-density rechargeable batteries are used for motor driving power or energy storage of hybrid vehicles and electric vehicles.

The rechargeable battery includes an electrode assembly for charging and discharging current, a case for accommodating the electrode assembly and an electrolyte, and a cap plate for sealing an opening of the case.

### SUMMARY

Embodiments include a rechargeable battery, including an electrode assembly, a case accommodating the electrode assembly, a cap plate coupled to an opening of the case, the cap plate including a first vent, and an insulation member having a second vent, the insulation member being between the electrode assembly and the cap plate inside the case.

The second vent may have an opening pressure to open at a lower pressure than the first vent.

The second vent may have an opening pressure of greater than 7.5 kgf/cm² (corresponding to about 735.5 kPa) and/or may have an opening pressure of three-fourths of an opening pressure of the first vent or less. This facilitates releasing internal pressure.

The first vent may include a notch groove configured to be cut, and a cross-sectional area to be cut along the notch groove may be between 500 and 1500 mm². This facilitates manufacturing.

The second vent may be aligned with the first vent. This facilitates releasing internal pressure.

The first vent may include (e.g., being formed from) metal, the first vent being welded to the cap plate. This facilitates manufacturing.

The second vent may be integral with the insulation member, and/or the second vent may include (e.g., being formed from) a same material as the insulating member.

The insulation member includes an outward concave groove toward the cap plate, the outward concave groove resulting in a gap between the insulation member and the cap plate. This enhances operation of the second vent.

The second vent may be in the outward concave groove when opened. This enhances operation of the second vent.

The insulation member may include an inner concave groove toward the electrode assembly. This enhances robustness of the battery.

The insulation member may further include an electrolyte-containing part attached to the inner concave groove. This enhances the health state.

The electrolyte-containing part may have a coating layer coated with an electrolyte-containing material. This enhances the health state.

The electrolyte-containing part may include an oriented polystyrene heat shrink film. This enhances the health state.

An electrode terminal electrically connected to the electrode assembly may include a plate terminal installed outside the cap plate, and a rivet terminal coupled with the insulating member, the cap plate and the plate terminal, the rivet terminal being in a sealing structure in a seating part of the insulation member that seals a terminal hole of the cap plate.

The insulation member may be coupled to an inner peripheral surface of the case in another sealing structure on an outer peripheral surface of the insulation member. This facilitates manufacturing.

Embodiments include a rechargeable battery module, including a plurality of rechargeable batteries, each of the plurality of rechargeable batteries including an insulation member and a cap plate coupled to an opening of a case in which an electrode assembly is accommodated, wherein the cap plate includes a first vent, and wherein the insulation member includes a second vent between the electrode assembly and the cap plate inside the case.

The insulation member may include an outward concave groove toward the cap plate, the outward concave groove resulting in a gap between the insulation member and the cap plate. This enhances operation of the second vent.

The outward concave groove may be oriented upwards or downwards. This may facilitate usage.

The first vent may include metal, and the second vent may be part of the insulating member. This facilitates manufacturing.

The second vent may include a notch groove, and the notch groove of the second vent may open at a lower pressure than a notch groove of the first vent. This facilitates releasing internal pressure.

The rechargeable battery may be installed such that the outward concave groove is upward or downward. This may facilitate usage.

The first vent can be formed of metal, and the second vent can be formed of the insulating member. This facilitates manufacturing.

The second vent may have a notch groove, and the notch groove may be opened at a lower pressure than the notch groove of the first vent. This facilitates releasing internal pressure.

### BRIEF DESCRIPTION OF THE DRAWINGS

Features will become apparent to those of ordinary skill in the art by describing in detail exemplary embodiments with reference to the attached drawings, in which:
FIG. 1 is a perspective view of a rechargeable battery based on a first embodiment of the present disclosure;
FIG. 2 is a cross-sectional view taken along the line II-II of FIG. 1;
FIG. 3 is a partial cross-sectional view of the rechargeable battery of FIG. 2 in an inverted state;
FIG. 4 shows a cross-sectional view of a rechargeable battery in accordance with a second embodiment of present disclosure;
FIG. 5 is a partial cross-sectional view of the rechargeable battery of FIG. 4 in an inverted state; and
FIG. 6 shows a perspective view of a rechargeable battery module based on an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, various embodiments of the present disclosure will be described in detail with reference to the accompanying drawings so that those skilled in the art may easily implement the present disclosure. However, the present disclosure may be implemented in several different forms and is not limited to the embodiments described herein.

Terms including ordinal numbers, such as first and second, may be used to describe various components, but the above components are not limited by the above terms. The terms are used only for the purpose of distinguishing one component from another component.

When a component is "connected" or "coupled" to another component, it should be understood that another component may be directly connected to or coupled to that other component, but another component may exist in the middle. On the other hand, when it is mentioned that one component is "directly connected" or "directly coupled" to another component, it should be understood that no other component exists in the middle.

Throughout the specification, terms such as "include" or "have" are intended to specify that features, numbers, steps, actions, components, components, or combinations thereof described in the specification exist, and should be understood not to preclude the existence or addition of one or more other features, numbers, steps, actions, components, components, or combinations thereof. Therefore, when a part "includes" a component, this means that it may contain more components, rather than excluding other components unless specifically opposed.

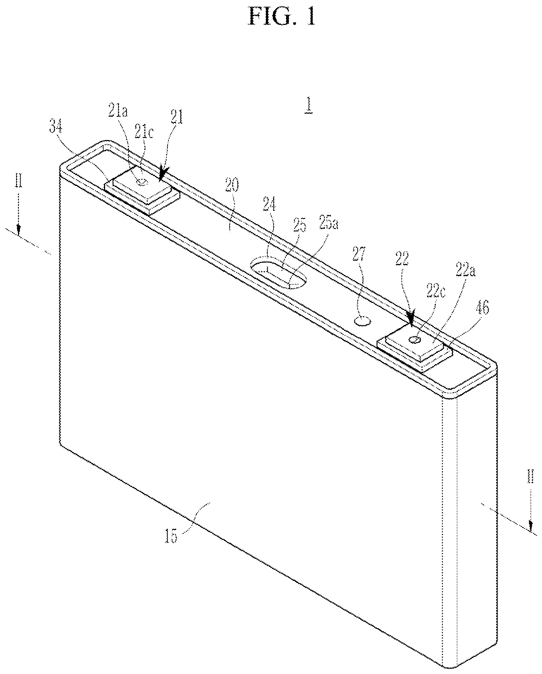

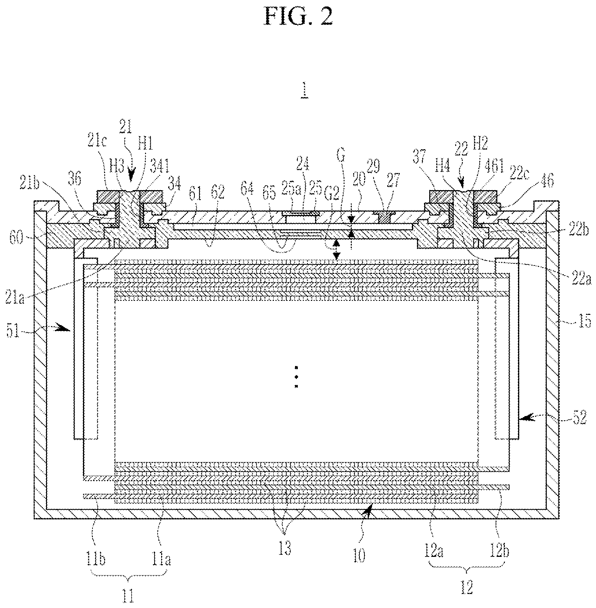

FIG. 1 is a perspective view of a rechargeable battery based on the first embodiment of the present disclosure and FIG. 2 is a cross-sectional view taken along the line **II-II** of FIG. 1. Referring to FIGS. 1 and 2, a rechargeable battery 1 according to the first embodiment includes an electrode assembly 10 for charging and discharging current, a case 15 housing (e.g., accommodating) the electrode assembly 10, a cap plate 20 coupled to an opening of the case 15, and an insulation member 60.

For example, the electrode assembly 10 is formed by arranging electrodes (a negative electrode 11 and a positive electrode 12) on both sides of a separator 13 which is an insulator, and winding the negative electrode 11, a separator 13 and the positive electrode 12 into a jelly roll state.

The negative electrode 11 and the positive electrode 12 each include coating parts 11a, 12a formed by coating an active material on a current collector of a thin plate metal, and uncoated parts 11b, 12b formed of a current collector exposed by not coating the active material.

The uncoated part 11b of the negative electrode 11 is formed at one end of the negative electrode 11 along the negative electrode 11 that is wound. The uncoated part 12b of the positive electrode 12 is formed at one end of the positive electrode 12 along the positive electrode 12 that is wound. The uncoated parts 11b, 12b are disposed at both ends of the electrode assembly 10, respectively.

For example, the case 15 forms an approximately cuboidal inner space to set a space for accommodating the electrode assembly 10 and an electrolyte and an opening connecting the outside and the inner space formed on one surface of the cuboidal inner space. The opening allows the electrode assembly 10 to be inserted into the case 15.

The cap plate 20 is installed in the opening of the case 15 to seal the opening of the case 15. For example, the case 15 and the cap plate 20 may be made of aluminum and welded to each other.

In addition, the cap plate 20 includes an electrolyte injection port 29, a first vent hole 24, and terminal holes H1, H2. The electrolyte injection port 29 allows an electrolyte to be injected into the case 15 after the cap plate 20 is coupled to the case 15. After the electrolyte is injected, the electrolyte injection port 29 is sealed with a sealing cap 27.

The first vent hole 24 is sealed by a first vent 25 to release an internal pressure of the rechargeable battery 1. When the internal pressure of the rechargeable battery 1 reaches a predetermined pressure, the first vent 25 is cut along the notch groove 25a to open the first vent hole 24.

In addition, the rechargeable battery 1 includes electrode terminals (e.g., a negative terminal 21 and a positive terminal 22) electrically connected to the electrode assembly 10 and installed on the cap plate 20 (e.g., installed through holes in the cap plate). The negative terminal 21 and the positive terminal 22 are respectively installed in the terminal hole H1 and the terminal hole H2 of the cap plate 20 and are electrically connected to the electrode assembly 10 inside the case 15.

In addition, the negative terminal 21 and the positive terminal 22 are connected to the negative lead tab 51 and positive lead tabs 52, and the negative lead tab 51 and positive lead tabs 52 are connected to the uncoated parts 11b and 12b, respectively, which are electrically connected to the negative electrode 11 and the positive electrode 12 of the electrode assembly 10.

That is, the negative terminal 21 is electrically connected to the negative electrode 11 of the electrode assembly 10, and the positive terminal 22 is electrically connected to the positive electrode 12 of the electrode assembly 10. Therefore, the electrode assembly 10 is drawn out of the case 15 through the negative terminal 21 and the positive terminal 22.

The insulation member 60 is provided between the electrode assembly 10 and the cap plate 20 inside the case 15. The insulation member 60 is integrally formed and installed between the negative lead tab 51 and the positive lead tab 52 and the cap plate 20 to electrically insulate the negative lead tab 51 and the positive lead tab 52 from the cap plate 20. For example, the insulation member 60 may be formed of a synthetic resin material that does not react to an electrolyte.

In addition, the negative terminal 21 and the positive terminal 22 include plate terminal 21c and plate terminal 22c, respectively, disposed outside the cap plate 20, and rivet terminals 21a, 22a connecting the inside and the outside of the cap plate 20. The rivet terminals 21a, 22a are sequentially coupled through the insulation member 60, the cap plate 20, and the plate terminal 21c and the plate terminal 22c, are seated on the insulation member 60, and are installed in the terminal holes H1, H2 of the cap plate 20 in a sealing structure.

For example, the rivet terminals 21a, 22a are respectively installed in the terminal holes H1, H2 of the cap plate 20, and inserted into the coupling holes H3, H4 of the plate terminal 21c and the plate terminal 22c placed outside the cap plate 20 to be riveted.

The negative and positive terminals 21 and 22 may further include flanges 21b and 22b formed integrally wide on the rivet terminals 21a and 22a inside the cap plate 20. The rivet terminals 21a and 22a are electrically connected to the electrode assembly 10 through flanges 21b and 22b.

On the other hand, the top plate 34 on the side of the negative terminal 21 is formed of an electrical insulating material to electrically insulate the plate terminal 21c of the negative terminal 21 and the cap plate 20 from each other. That is, the cap plate 20 maintains an electrically insulated state from the negative terminal 21.

The top plate 46 on the side of the positive terminal 22 is formed of an electrically conductive material to electrically connect the plate terminal 22c of the positive terminal 22 and the cap plate 20 to each other. That is, the cap plate 20 maintains an electrically connected state to the positive terminal 22.

Furthermore, a negative gasket 36 and a positive gasket 37 are inserted into the terminal holes H1 and H2, respectively. Therefore, the negative gasket 36 and the positive gasket 37 electrically insulate the rivet terminals 21a, 22a from the cap plate 20 and form a sealing structure with respect to the electrolyte stored in the case 15. The positive gasket 37 further electrically insulates the rivet terminal 22a from the top plate 46.

That is, the negative gasket 36 and the positive gasket 37 are installed between the rivet terminals 21a, 22a of the negative and positive terminals 21, 22 and the inner surfaces of the terminal holes H1, H2, respectively, to seal the rivet terminals 21a, 22a of the negative and positive terminals 21, 22 and the cap plate 20 in an insulating structure.

The negative gasket 36 is inserted into a through-hole 341 of the top plate 34 to further seal between the rivet terminal 21a and the top plate 34. The positive gasket 37 is inserted into a through hole 361 of the top plate 46 to further seal the space between the rivet terminal 22a and the top plate 46 with an insulating structure.

The negative gasket 36 and the positive gasket 37 extend further between the flanges 21b, 22b and the inner surface of the cap plate 20 to further seal and electrically insulate between the flanges 21b, 22b and the cap plate 20.

By joining the negative lead tab 51 and the positive lead tab 52 to the bottom of the rivet terminals 21a, 22a and caulking the bottom, the negative and positive lead tabs 51, 52 are connected to the bottom of the rivet terminals 21a, 22a while being supported by the flanges 21b, 22b.

In addition, since the insulation member 60 is coupled around the terminal holes H1, H2 of the cap plate 20 on one side, movement within the case 15 is prevented. Also, the insulation member 60 surrounds the negative lead tab 51 and the positive lead tab 52 and the rivet terminals 21a, 22a, and the flanges 21b and 22b on the other side, thereby strengthening their connection and coupling structure.

The insulation member 60 includes a second vent hole 64 corresponding to (e.g., aligned with) a first vent hole 24, and a second vent 65 provided in the second vent hole 64. The second vent 65 includes a notch groove that is cut to open the second vent hole 64 when the internal pressure of the rechargeable battery 1 reaches a predetermined pressure. The notch groove of the second vent 65 may be formed in the same structure as the notch groove 25a of the first vent 25.

The second vent 65 has an opening pressure that is opened at a pressure lower than that of the first vent 25. Therefore, when the internal pressure of the rechargeable battery 1 reaches the predetermined pressure, the second vent 65 may be opened first, and then the first vent 25 may be opened. Therefore, it is possible to prevent the opening of the first vent 25 from being suppressed by the opening of the second vent 65 even though the internal pressure is increased and the first vent 25 is opened.

For example, the second vent 65 may have an opening pressure greater than 7.5 kgf/cm² (corresponding to about 735.5 kPa), and may have an opening pressure of 3/4 of the opening pressure of the first vent 25. That is, the rechargeable battery 1 prevents the opening of the first vent 25 at less than 3/4 level of the opening pressure of the first vent 25 with an internal pressure greater than 7.5 kgf/cm² (corresponding to about 735.5 kPa). Therefore, when the internal pressure is less than 7.5 kgf/cm² (corresponding to about 735.5 kPa) or reaches 3/4 of the opening pressure of the first vent 25, the first vent 25 is placed in an open standby state.

The first vent 25 includes a notch groove 25a to be cut, and the cross-sectional area to be subsequently guided and cut along the notched groove is between 500 and 1500 mm²

The cross-sectional area of 500-1500 mm² may effectively respond even when the capacity of the rechargeable battery 1 increases. The second vent 65 is provided corresponding to (e.g., coinciding with or vertically overlapping) the first vent 25. The first vent 25 is made of metal and is installed in the first vent hole 24 of the cap plate 20 by welding. The second vent 65 may be formed of the same material as the insulation member 60 integrally with the insulation member 60 (i.e., a monolithic and seamless structure)

The insulation member 60 includes an outward concave groove 61 that is formed concavely toward the cap plate 20 (e.g., the concavity opens toward the cap plate 20) to form a gap G between the insulation member 60 and the cap plate 20. Accordingly, the second vent 65 may be located in the outward concave groove 61 when the second vent 65 is opened. Accordingly, the second vent 65 is not obstructed by the inner surface of the cap plate 20 when the second vent 65 is opened.

Additionally, the insulation member 60 has an inner concave groove 62 that is formed concavely toward the electrode assembly 10. Since the inner concave groove 62 increases the gap G2 between the insulation member 60 and the electrode assembly 10, it may further prevent the electrode assembly 10 from being damaged by the insulation member 60.

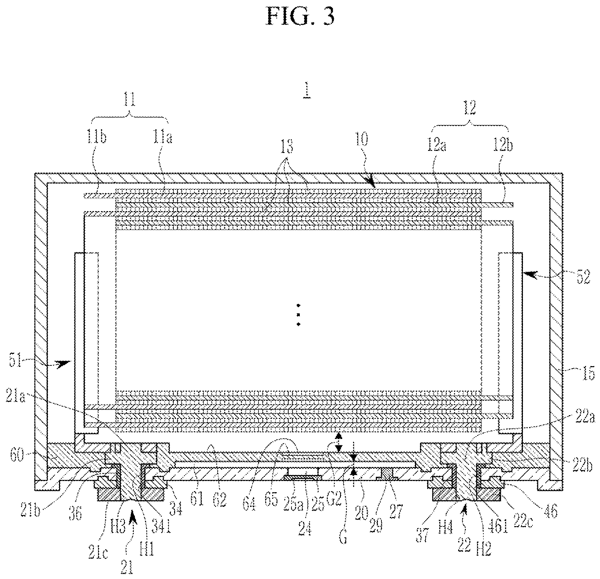

FIG. 3 is a partial cross-sectional view of the rechargeable battery of FIG. 2 in an inverted state. Referring to FIG. 3, the insulation member 60 is coupled to the inner peripheral surface of the case 15 by a sealing structure as an outer peripheral surface. Therefore, even when the rechargeable battery 1 is installed upside down (compared to FIG. 2), the electrolyte may be prevented from flowing into the cap plate 20 through the insulation member 60 and the case 15.

**In** other words, even when the rechargeable battery 1 is driven in an inverted state, the electrolyte embedded in the case 15 is not filled between the cap plate 20 and the insulation member 60 and may be continuously supplied to the electrode assembly 10.

Hereinafter, a second embodiment of the present disclosure will be described. Descriptions of the same configurations as those of the first embodiment are omitted, and descriptions of different configurations are described.

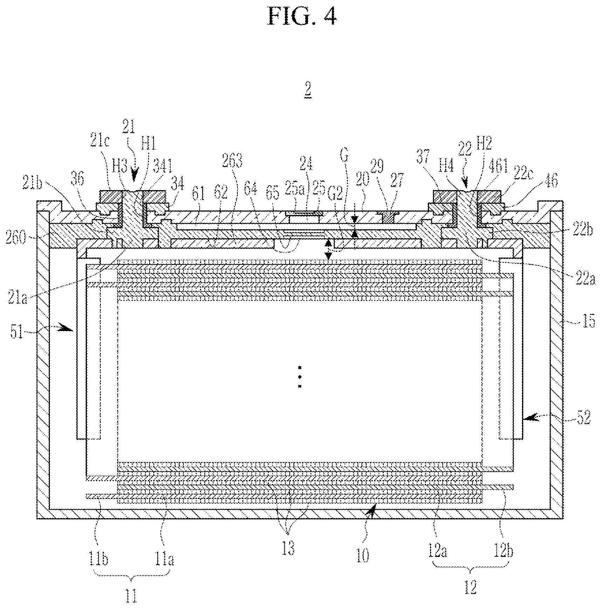

FIG. 4 shows a cross-sectional view of a rechargeable battery in accordance with a second embodiment of present disclosure. Referring to FIG. 4, in the rechargeable battery 2 of the second embodiment, the insulation member 260 further includes an electrolyte-containing part 263 attached to the inner concave groove 62.

The electrolyte-containing part 263 may be formed of a coating layer coated with an electrolyte-containing material. In addition, the electrolyte-containing part 263 may be formed of a directional polystyrene OPS (also known as oriented polystyrene) heat shrink film.

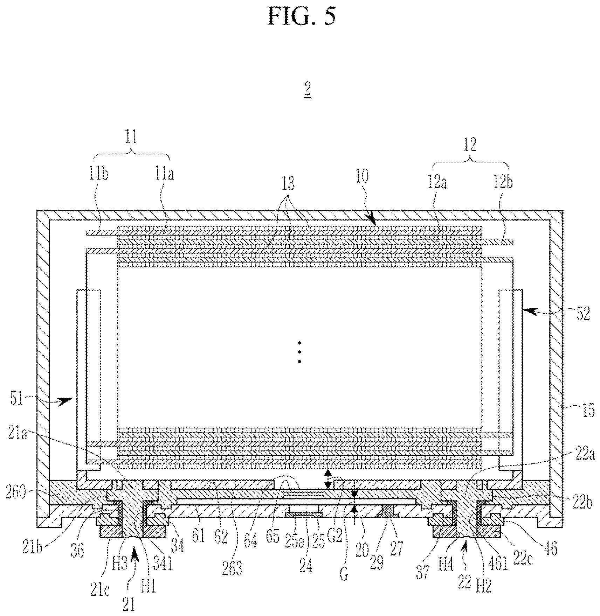

FIG. 5 is a partial cross-sectional view of the rechargeable battery of FIG. 4 in an inverted state. Referring to FIG. 5, even when the rechargeable battery 2 is driven in an inverted state, the electrolyte embedded in the case 15 may not be filled between the cap plate 20 and the insulation member 260 and may be continuously supplied to the electrode assembly 10.

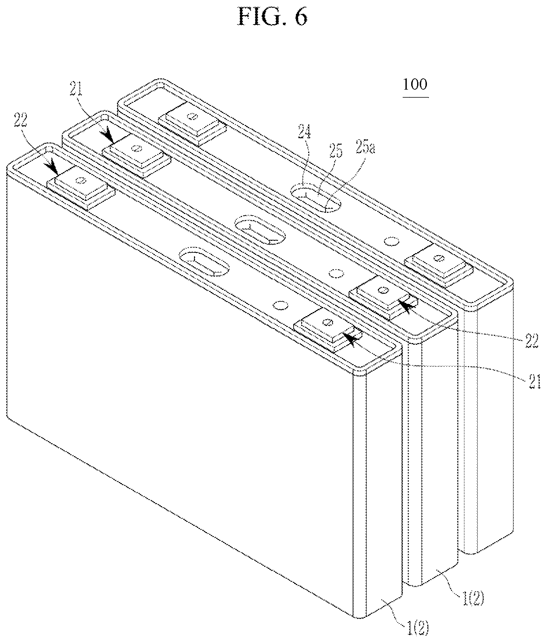

FIG. 6 shows a perspective view of a rechargeable battery module based on an embodiment of the present disclosure. Referring to FIG. 6, a rechargeable battery module 100 of an embodiment includes a plurality of rechargeable batteries 1 or 2, and further includes a busbar electrically connecting the rechargeable batteries 1, 2 in parallel or series, and a flexible printed circuit that transmits signals detected from the rechargeable batteries 1, 2.

The cap plate 20 includes a first vent 25. Referring to FIGS. 2, 4, and 6, as disclosed in the first and second embodiments, the insulation member 60 and insulation member 260 are provided between the electrode assembly 10 and the cap plate 20 in the case 15 and, have a second vent 65.

The first vent 25 may be formed of metal, and the second vent 65 may be formed of an insulating member. In addition, the second vent 65 includes a notch groove, and the notch groove has an opening pressure that opens at a lower pressure than the notch groove 25a of the first vent 25.

Even when the rechargeable batteries 1 and 2 are installed upside down, the electrolyte may be prevented from flowing into the cap plate 20 through the insulation member 60, the insulation member 260 and the case 15. Therefore, even when the rechargeable batteries 1 and 2 are driven in an inverted state, the electrolyte embedded in the case 15 is not filled between the cap plate 20 and the insulation member 60 and insulation member 260 and may be continuously supplied to the electrode assembly 10.

SOH (State of Health) is an index representing the performance (health state) of the rechargeable battery, and is an index representing the performance level of the current rechargeable battery compared to the initial performance of the rechargeable battery. Table 1 shows the results of the evaluation of 60°C high temperature storage and 45°C high temperature life.

**(Table 1)**

| category | SOH(%) @60°C, 150day | SOH(%) @45°C, 300cy |
|---|---|---|
| first embodiment | 94% | 89.5% |
| second embodiment | 99% | 91% |
| Comparative Example | 85% | 84.5% |

For the first and second embodiments and the comparative example, the performance level of the rechargeable battery is shown when the storage temperature is 60°C and the storage period is 150 days, and the performance level of the rechargeable battery is shown when the storage temperature is 45°C and the number of charge/discharge cycles is 300 cy (cycles). The comparative example is a rechargeable battery utilizing an insulation member of the air gap that does not include the outer concave groove 61 and the inner concave groove 62 and the second vent 65.

When the storage temperature is 60°C and the storage period is 150 days, the SOH of the comparative example is 85%, while the SOH of the first and second embodiments are 94% and 99%, respectively. Compared to the comparative example, it may be found that the performance level SOH of the rechargeable battery of the first and second embodiments is superior.

At a storage temperature of 45°C and a number of charge/discharge cycle of 300 cy, the SOH of the comparative example is 84.5%, while the SOH of the first and second embodiments were 89.5% and 91%, respectively. Compared to the comparative example, it may be found that the performance level SOH of the rechargeable battery of the first and second embodiments is superior.

A purpose of present disclosure is to provide a rechargeable battery in which an electrolyte is continuously supplied to an electrode assembly even when a top terminal is located under a module or pack by inverting a cell.

**In** addition, an object of present disclosure is to provide a rechargeable battery module that inverts the cell so that the electrolyte is continuously supplied to the electrode assembly even when the top terminal is located under the rechargeable battery.

A rechargeable battery may include an electrode terminal installed on the cap plate to draw the electrode of the electrode assembly to the outside of the case. Using such a top terminal rechargeable battery, a module or pack may be configured such that the terminal is located at the top of the rechargeable battery, and the module or pack may be configured such that the terminal is located at the bottom of the rechargeable battery. Energy can be increased more by a module or pack where the terminal is placed on the upper part of the rechargeable battery than by a module or pack where the terminal is placed on the lower part of the rechargeable battery.

**If** evaluating cell performance by inverting the top terminal rechargeable battery, an extra electrolyte remaining inside the rechargeable battery cannot be continuously supplied to the electrode assembly. Therefore, the electrolyte solution becomes insufficient in the inverted rechargeable battery, and the cell performance of the rechargeable battery can be dramatically degraded at high temperatures.

An embodiment of present disclosure includes an insulation member between the electrode assembly and the cap plate in the case and a second vent in the insulation member to prevent the electrolyte from being collected on the cap plate side without disturbing the opening of the vent during an event, so that the electrolyte can be continuously supplied to the electrode assembly even when the rechargeable battery is installed upside down.

Although the preferred embodiment of the present disclosure has been described above, the present disclosure is not limited thereto, and it is possible to perform various modifications within the scope of the claims, the detailed description of the disclosure, and the accompanying drawings, and it is natural to fall within the scope of the present disclosure.

According to various aspects, the second vent is configured to open at a lower pressure than the first vent, e.g., when being exposed to the pressure. For example, the second vent has an opening pressure to open at a lower pressure than the first vent.

According to various aspects, the term "opening pressure" expresses the condition (also referred as to opening condition) for a valve, at which the valve opens when being exposed to the opening pressure. At the opening pressure, the integrity of the valve is exceeded, thereby causing a deformation and/or breakage of the valve. The opening pressure may be expressed as a constructional property of the valve as it can be changed by changing the construction of the valve. The opening condition may be also expressed by any other measure, e.g., as a force or a strength (also referred as to opening strength), to which the valve is exposed. The references made hereto apply analogously hereto.

According to various aspects, second vent may have an opening pressure of greater than 250 kPa, e.g., than 500 kPa, e.g., than 735 kPa (Kilopascal) and/or may have an opening pressure of 95% of an opening pressure of the first vent or less, e.g., of 90% of an opening pressure of the first vent, e.g., of 80% of an opening pressure of the first vent, e.g., of 75% of an opening pressure of the first vent.

According to various aspects, the second vent may be disposed between the first vent and the electrode assembly. Alternatively or additionally the first vent may be disposed behind the second vent along a direction, along which the electrode assembly is stacked.

According to various aspects, a distance between the first vent and the second vent is less than between the second vent and the electrode assembly.

According to various aspects, a gap is provided between the insulation member and the cap plate, e.g., by a groove of the insulation member (preferably facing, e.g., delimited by, the cap plate). Preferably, the second vent may open into the groove and/or may delimit the groove. According to various aspects, the groove may be delimited by a concave surface (e.g., then also shortly referred as to concave groove).

According to various aspects, the insulation member and/or the second vent may include (e.g., be formed from) a dielectric and/or polymer.

According to various aspects, the battery may be used (e.g., operated) in an inverted state, e.g., oriented such that the planetary gravity points from the electrode assembly to the cap plate.

According to various aspects a rechargeable battery module comprises a plurality of rechargeable batteries, each of the plurality of rechargeable batteries including an insulation member and a cap plate coupled to an opening of a case in which an electrode assembly is accommodated, wherein the cap plate comprises a first vent, and wherein the insulation member comprises a second vent between the electrode assembly and the cap plate inside the case. For example, each of the plurality of rechargeable batteries is configured as detailed herein.

According to various aspects, the insulation member comprises an outward concave groove toward the cap plate, preferably the outward concave groove providing in a gap between the insulation member and the cap plate; wherein, further preferably, the outward concave groove is oriented upwards or downwards (e.g., with respect to planetary gravity).

According to various aspects the first vent includes (e.g., is formed from) a metal, and/or the second vent is part of the insulating member.

According to various aspects, the second vent comprises a notch groove, and/or the notch groove of the second vent opens at a lower pressure than a notch groove of the first vent.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery (1, 2), comprising:
an electrode assembly (10);
a case (15) accommodating the electrode assembly (10);
a cap plate (20) coupled to an opening of the case (15), the cap plate (20) including a first vent (25); and
an insulation member (60, 260) having a second vent (65), the insulation member (60, 260) being between the electrode assembly (10) and the cap plate (20) inside the case (15).

2. The rechargeable battery (1, 2) as claimed in claim 1, wherein the second vent (65) has an opening pressure to open at a lower pressure than the first vent (25).

3. The rechargeable battery (1, 2) as claimed in claim 1 or 2, wherein the second vent (65) has an opening pressure of greater than 735.5 kPa and has an opening pressure of three-fourths of an opening pressure of the first vent (25).

4. The rechargeable battery (1, 2) as claimed in one of claims 1 to 3, wherein the first vent (25) comprises:
a notch groove (25a) configured to be cut, and
a cross-sectional area to be cut along the notch groove (25a) is between 500 and 1500 mm².

5. The rechargeable battery (1, 2) as claimed in one of claims 1 to 4, wherein the second vent (65) is aligned with the first vent (25).

6. The rechargeable battery (1, 2) as claimed in one of claims 1 to 5, wherein the first vent (25) includes metal, the first vent (25) being welded to the cap plate (20).

7. The rechargeable battery as claimed in one of claims 1 to 6, wherein the second vent (65) is integral with the insulation member (60, 260), the second vent (65) including a same material as the insulating member.

8. The rechargeable battery (1, 2) as claimed in one of claims 1 to 7, wherein the insulation member (60, 260) comprises an outward concave groove (61) toward the cap plate (20), the outward concave groove (61) resulting in a gap between the insulation member (60, 260) and the cap plate (20).

9. The rechargeable battery (1, 2) as claimed in claim 8, wherein the second vent (65) is in the outward concave groove (61) when opened; and/or wherein the insulation member (60, 260) comprises an inner concave groove (62) toward the electrode assembly (10).

10. The rechargeable battery (1, 2) as claimed in claim 9, wherein the insulation member (60, 260) further comprises an electrolyte-containing part (263) attached to the inner concave groove (62).

11. The rechargeable battery as claimed in claim 10, wherein the electrolyte-containing part (263) has a coating layer coated with an electrolyte-containing material.

12. The rechargeable battery (1, 2) as claimed in claim 11, wherein the electrolyte-containing part (263) includes an oriented polystyrene heat shrink film.

13. The rechargeable battery (1, 2) as claimed in one of claims 1 to 12, wherein an electrode terminal electrically connected to the electrode assembly (10) comprises:
a plate terminal (21c, 22c) installed outside the cap plate (20); and
a rivet terminal (21a, 22a) coupled with the insulating member, the cap plate (20) and the plate terminal (21c, 22c), the rivet terminal (21a, 22a) being in a sealing structure in a seating part of the insulation member (60, 260) that seals a terminal hole of the cap plate (20).

14. The rechargeable battery (1, 2) as claimed in claim 13, wherein the insulation member (60, 260) is coupled to an inner peripheral surface of the case (15) in another sealing structure on an outer peripheral surface of the insulation member (60, 260).

15. A rechargeable battery module (100), comprising:
a plurality of rechargeable batteries (1, 2), each of the plurality of rechargeable batteries (1, 2) being configured according to one of claims 1 to 14.
